# EUROPÄISCHE PATENTSCHRIFT

(11) **EP 3 526 790 B1**
(45) Veröffentlichungstag und Bekanntmachung des Hinweises auf die Patenterteilung: **28.06.2023**
(21) Anmeldenummer: 17776993.2
(22) Anmeldetag: 25.09.2017
(51) Int. Cl.: G10L 15/22, G06F 3/01, G06F 3/16, G06F 3/03

(54) **MULTIMODALER DIALOG IN EINEM KRAFTFAHRZEUG**
MULTIMODAL DIALOG IN A MOTOR VEHICLE
DIALOGUE MULTIMODAL DANS UN VÉHICULE AUTOMOBILE

(30) Priorität: 13.10.2016 DE 102016220004; 03.11.2016 DE 102016221564
(43) Veröffentlichungstag der Anmeldung: 21.08.2019
(73) Patentinhaber: Bayerische Motoren Werke Aktiengesellschaft, 80809 München (DE)
(72) Erfinder: SCHWARZ, Felix, 80333 München (DE)
(86) Internationale Anmeldenummer: PCT/EP2017/074174
(87) Internationale Veröffentlichungsnummer: WO 2018/069027

(56) Entgegenhaltungen:
- WO-A2-2014/070872
- DE-A1-102014 012 158
- US-A1- 2002 181 773
- US-A1- 2013 211 843

## Beschreibung

Die vorliegende Erfindung betrifft ein Verfahren zur Durchführung eines multimodalen Dialogs in einem Fahrzeug, insbesondere einem Kraftfahrzeug, einen multimodalen Dialogautomaten für ein Fahrzeug, insbesondere für ein Kraftfahrzeug, sowie ein Kraftfahrzeug.

Ein Fahrzeug im Sinne der Erfindung kann insbesondere ein Personenkraftwagen oder Lastkraftwagen sein. Die Erfindung ist jedoch auch bei anderen Land-, Wasser-, Schienen- und Luftfahrzeugen anwendbar.

Moderne Kraftfahrzeuge bieten eine Vielzahl unterschiedlicher und einander teilweise ergänzender Möglichkeiten, Funktionen des Fahrzeugs zu bedienen. Neben herkömmlichen Bedienelementen verfügen moderne Fahrzeuge häufig über eine Spracheingabe, die es einem Fahrzeugnutzer, insbesondere einem Fahrer des Fahrzeugs, ermöglicht, bestimmte Eingaben per Sprache zu tätigen. Beispielsweise können auf diese Weise Telefonanrufe getätigt, Navigationsziele eingestellt oder Radiosender ausgewählt werden.

Manche Fahrzeuge sind nicht nur zur Entgegennahme einfacher Sprachbefehle in der Lage, sondern zu einem mehrgliedrigen Sprachdialog. Es können also von dem Fahrzeug im Ansprechen auf die erste Spracheingabe Antworten oder Rückfragen ausgegeben werden, auf die der Nutzer dann wiederum mit einer Spracheingabe antworten kann. Alternativ kann der Nutzer den Dialog auch unter Nutzung herkömmlicher Bedienelemente des Fahrzeugs fortsetzen, also beispielsweise zur Bestätigung eines vom Fahrzeug per Sprachausgabe vorgeschlagenen Ergebnisses (z.B. eines Telefonbucheintrags oder einer Adresse) eine Bestätigungstaste drücken.

Ferner ist eine Gestensteuerung bei Kraftfahrzeugen bekannt, bei der bestimmte Funktionen mittels bestimmter Handgesten bedient werden können. Zur Vermeidung von Fehlerkennungen ist die Gestenerkennung in Kraftfahrzeugen in der Regel nicht dauerhaft vollumfänglich verfügbar. Vielmehr werden bestimmte Gesten, insbesondere einfache Gesten, erst nach dem Eintreten bestimmter Ereignisse freigegeben. Beispielsweise kann eine Geste zum Annehmen eines Telefonanrufs ausschließlich für einen bestimmten Zeitraum nach dem Eingehen eines Telefonanrufs freigegeben werden.

Die natürliche menschliche Interaktion ist multimodal, umfasst also eine Mehrzahl unterschiedlicher und einander möglicherweise ergänzender Kommunikationskanäle, darunter insbesondere Sprache, Gestik, Mimik und weitere. Zwar bieten moderne Kraftfahrzeuge, wie vorstehend dargestellt, mehrere natürliche Kommunikationskanäle zur Kommunikation mit dem Fahrzeug an, jedoch ist ein multimodaler Dialog nur in sehr eingeschränkter Form bekannt.

DE 10 2012 013 503 A1 beschreibt diesbezüglich ein Verfahren zum Betreiben eines Kraftwagens. Dabei ist eine kombinierte Gesten- und Sprachsteuerung vorgesehen. Der Fahrzeuginsasse kann beispielsweise auf Objekte wie Points of interest (POI), mit welchen er interagieren mochte, zeigen und im Wesentlichen gleichzeitig einen Sprachbefehl tätigen, aus welchem hervorgeht, in welcher Form er mit dem Objekt interagieren möchte.

WO 2014/070872 A2 offenbart ein System und ein Verfahren zur multimodalen Interaktion mit verminderter Ablenkung beim Betrieb von Kraftfahrzeugen. Die multimodale Interaktion kann Spracheingaben und Gesteneingaben umfassen. Das System kann den Nutzer zu einer Gesteneingabe auffordern, um zusätzliche Informationen zu einer zuvor erfolgten Spracheingabe zu erlangen.

US 2002/0181773 A1 und US 2013/0211843 A1 beschäftigen sich mit Systemen zur Gestensteuerung. Dabei ist jeweils vorgesehen, dass die Gestensteuerung durch einen Sprachbefehl, der ein bestimmtes Befehlswort umfasst, aktiviert werden kann.

Es besteht ein Bedürfnis danach, die Interaktion zwischen Fahrzeug und Fahrzeugnutzer im Hinblick auf die Bereitstellung eines möglichst natürlichen Dialogs zu verbessern.

Die Aufgabe wird gelöst bei einem Verfahren, einem Dialogautomat und einem Kraftfahrzeug mit den Merkmalen der unabhängigen Ansprüche. Vorteilhafte Weiterbildungen der Erfindung sind Gegenstände der abhängigen Ansprüche.

Bei dem erfindungsgemäßen Verfahren zur Durchführung eines multimodalen Dialogs in einem Fahrzeug, insbesondere einem Kraftfahrzeug, sind folgende Schritte vorgesehen:
- Erfassen einer Eingabe eines Fahrzeugnutzers zur Aktivierung eines Sprachdialogs und
- Aktivieren einer Gestenerkennung.

Der Erfindung liegt die Erkenntnis zugrunde, dass bei bekannten Fahrzeugen gerade dann, wenn von einem Nutzer ein möglichst natürlicher Dialog (nämlich ein Sprachdialog) begonnen wurde, eine Gestenerkennung nicht möglich ist, obwohl die multimodale Fortsetzung des Dialogs mit den Mitteln der Sprache und der Gestik dem natürlichen Interaktionsverhalten des Menschen entspricht.

Erfindungsgemäß ist daher vorgesehen, dass die Gestenerkennung des Fahrzeugs aktiviert wird, falls der Dialog nicht abgeschlossen ist.

Auf diese Weise wird es möglich, dass ein Nutzer einen multimodalen Dialog mit dem Fahrzeug führt, der sowohl Spracheingaben als auch Gesten umfassen kann. Zugleich werden aber die bekannten Nachteile einer dauerhaft aktivierten Gestenerkennung vermieden.

Die erfindungsgemäß geschaffene Interaktionsmöglichkeit lässt auch die Notwendigkeit entfallen, einen Dialog mit dem Fahrzeug unter Zuhilfenahme herkömmlicher Bedienelemente fortzusetzen (also z.B. ein vorgeschlagenes Ergebnis mittels Druck auf einen Drücksteller des Fahrzeugs zu bestätigen). Auch hierdurch wird die Interaktion zwischen Fahrzeug und Nutzer im Hinblick auf ihre Natürlichkeit verbessert.

Bei der Eingabe des Fahrzeugnutzers zur Aktivierung des Sprachdialogs kann es sich beispielsweise um ein Betätigen der im Stand der Technik bekannten sogenannten "Push-to-talk"-Taste (PTT-Taste) handeln, die beispielsweise an einem Lenkrad des Kraftfahrzeugs angeordnet sein kann.

Ferner kann auch vorgesehen sein, dass bestimmte Gesten, insbesondere bestimmte komplexe Gesten, dauerhaft aktiviert sind und somit dauerhaft erkannt werden können. Dies kann sinnvoll sein, weil die Gefahr einer Fehlerkennung bei komplexen Gesten gering ist. In diesem Fall ist die erfindungsgemäß aktivierte Gestenerkennung die Erkennung solcher (bevorzugt einfachen) Gesten, deren Erkennung nicht dauerhaft aktiviert ist. Bei einer solchen Ausführungsform kann die Eingabe des Fahrzeugnutzers zur Aktivierung des Sprachdialogs eine (komplexe) Geste sein.

Ferner kann vorgesehen sein, dass die Eingabe des Fahrzeugnutzers zur Aktivierung des Sprachdialogs eine erste Spracheingabe des Fahrzeugnutzers ist oder umfasst. Der Sprachdialog kann also mit anderen Worten durch eine Spracheingabe vom Fahrzeugnutzer initiiert werden. Bei dieser Ausführungsform ist ein zusätzlicher Verfahrensschritt des Verarbeitens der ersten Spracheingabe vorgesehen.

Bei einer Weiterbildung der Erfindung ist vorgesehen, dass geprüft wird, ob der Dialog abgeschlossen ist. Der Schritt des Aktivierens der Gestenerkennung erfolgt unter der Bedingung, dass der Dialog nicht abgeschlossen ist. Auf diese Weise lösen Spracheingaben, die unmittelbar verarbeitet werden können und keinen weiteren Dialog auslösen, keine Aktivierung der Gestenerkennung aus.

In weiterer Ausgestaltung wird eine weitere Eingabe erfasst und verarbeitet. Mit anderen Worten wird das Fahrzeug also befähigt, weitere Eingaben des Nutzers entgegenzunehmen, mithin den Dialog weiterzuführen. Bei der weiteren Eingabe kann es sich wieder um eine Spracheingabe handeln. Es kann sich aber insbesondere um eine Geste des Fahrzeugnutzers handeln. Der Fahrzeugnutzer beginnt den Dialog also mit einer ersten Äußerung, die eine Spracheingabe ist. Ab seiner zweiten Äußerung kann der Nutzer dann Sprache oder Gestik oder eine andere Kommunikationsform nutzen und somit einen multimodalen Dialog führen.

Mit weiterem Vorteil wird nach jeder Eingabe geprüft, ob der Dialog abgeschlossen ist. Trifft dies zu, so wird die Gestenerkennung deaktiviert. Der Dialog kann beispielsweise dadurch abgeschlossen werden, dass der Nutzer eine diesbezügliche Eingabe tätigt, also durch Betätigung eines bestimmten Bedienelements (im Stand der Technik mitunter als "Push to talk"-Taste bezeichnet), durch einen entsprechenden Sprachbefehl oder durch eine entsprechende Geste den Dialog abbricht. Ferner kann der Dialog aus inhaltlichen Gründen abgeschlossen werden, insbesondere, wenn der Befehl oder die Anfrage des Nutzers, die den Inhalt seiner ersten Spracheingabe bildet, abschließend ausgeführt oder beantwortet ist.

Das Verfahren kann vorsehen, dass im Ansprechen auf die erste Spracheingabe des Fahrzeugnutzers und / oder im Ansprechen auf die weitere Eingabe des Fahrzeugnutzers jeweils eine Eingabeaufforderung ausgegeben wird. Mit anderen Worten antwortet also das Fahrzeug auf Eingaben des Nutzers und stellt insbesondere Rückfragen oder fordert den Nutzer zu einer weiteren Eingabe auf. Die Eingabeaufforderung kann insbesondere per Sprachausgabe und / oder per Anzeige auf einem Bildschirm des Fahrzeugs (insbesondere auf einem Head-up-Display, auf einem Kombiinstrument und / oder auf einem in der Mittelkonsole des Fahrzeugs angeordneten Zentralbildschirm) ausgegeben werden.

Mit besonderem Vorteil kann vorgesehen sein, dass die weitere Eingabe, insbesondere die Geste, des Fahrzeugnutzers, in Abhängigkeit der Eingabeaufforderung erfasst und / oder verarbeitet wird. Indem bestimmte Eigenschaften der Eingabeaufforderung (z.B. deren Art und / oder Inhalt) bei der Erfassung und / oder Verarbeitung der weiteren Eingabe berücksichtigt werden, kann insbesondere die Genauigkeit der Gestenerkennung gesteigert werden. Es kann dazu insbesondere vorgesehen sein, dass als weitere Eingaben nur solche Gesten erkannt werden, die als Antwort auf die zuvor ausgegebene bestimmte Eingabeaufforderung möglich sind. Dies verringert die Wahrscheinlichkeit einer Falscherkennung einer Geste.

Eine vorteilhafte Ausführungsform der Erfindung sieht vor, dass die weitere Eingabe eine Geste ist oder eine Geste umfasst, wobei die Eingabeaufforderung eine Aufforderung zur Auswahl einer vorgeschlagenen Option ist und wobei die Geste eine Zeigegeste, bevorzugt eine mit einem Finger ausgeführte Zeigegeste ist. Besonders bevorzugt ist die Zeigegeste eine in Richtung eines Bildschirms ausgeführte Zeigegeste, wobei die vorgeschlagene Option auf dem Bildschirm dargestellt wird.

Mit anderen Worten soll also bei dieser Ausführungsform das Bestätigen einer vorgeschlagenen Option (z.B. eines Telefonbucheintrags, einer Adresse für das Navigationssystem, eines Musiktitels etc.) durch eine Zeigegeste (auch als "Point-Geste" bezeichnet) ermöglicht werden. Damit ist insbesondere eine Geste gemeint, bei der von dem Fahrzeugnutzer zumindest ein Finger, insbesondere ein Zeigefinger, ausgestreckt wird. Wenn die vorgeschlagene Option auf einem Bildschirm (z.B. einem Head-up-Display) dargestellt wird, so kann vorgesehen sein, dass der Fahrzeugnutzer mit dem gestreckten Finger in die (zumindest ungefähre) Richtung des Bildschirms deuten muss. Mit weiteren Vorteil kann zusätzlich oder alternativ gefordert werden, dass der Nutzer den Finger in die Zeigerichtung vor- und / oder vor- und zurückbewegt. Mit anderen Worten vollführt der Nutzer dann in der Luft eine Geste, die die Betätigung eines herkömmlichen Drucktasters imitiert.

Eine weitere vorteilhafte Ausführungsform der Erfindung sieht vor, dass die weitere Eingabe eine Geste ist oder eine Geste umfasst, wobei die Eingabeaufforderung eine Aufforderung zur Auswahl einer Option aus einer Mehrzahl vorgeschlagener Optionen ist, wobei die Eingabeaufforderung insbesondere eine geschlossene Frage oder eine Aufforderung zur Auswahl eines Eintrags einer Ergebnisliste ist und wobei die Geste eine eine im Wesentlichen vertikal ausgeführte Bewegung umfassende Zeigegeste, bevorzugt eine mit einem Finger ausgeführte Zeigegeste, besonders bevorzugt eine in Richtung eines Bildschirms ausgeführte Zeigegeste ist, wobei zumindest eine der vorgeschlagenen Optionen auf dem Bildschirm angezeigt wird.

Mit anderen Worten soll bei dieser Ausführungsform das "Blättern" oder "Scrollen" durch eine Ergebnisliste mittels einer Geste ermöglicht werden, bei der der Nutzer insbesondere einen einzelnen Finger, insbesondere seinen Zeigefinger, aufwärts oder abwärts bewegt. Es kann vorgesehen sein, dass mit jeder Auf- bzw. Abwärtsbewegung der vorherige bzw. nachfolgende Listeneintrag (oder umgekehrt) angezeigt wird. Es kann aber auch vorgesehen sein, dass bei einer Auf- bzw. Abwärtsbewegung abhängig von der Schnelligkeit und der Amplitude der Geste die Darstellung der Ergebnisliste in die entsprechende Richtung bewegt wird, so dass in vorteilhafter Weise ein rasches Navigieren durch Ergebnislisten mit einer Vielzahl von Einträgen ermöglicht wird.

Eine weitere vorteilhafte Ausführungsform der Erfindung sieht vor, dass die weitere Eingabe eine Geste ist oder eine Geste umfasst, wobei die Geste eine eine im Wesentlichen horizontal mit einer Hand oder mit einem Finger ausgeführte Bewegung umfassende Geste ist. Wird diese Geste, die als "Wisch-Geste" oder "Swipe-Geste" bezeichnet werden kann, erkannt, so wird die Gestenerkennung deaktiviert. Mit anderen Worten ist also vorgesehen, dass eine durch eine solche Wisch-Geste gebildete weitere Eingabe einen Befehl zum Abbruch des Dialogs darstellt. Hierdurch kann mit besonderem Vorteil die Abbruch-Funktion der "Push-to-talk"-Taste durch eine entsprechende Geste ersetzt werden.

Es sei allerdings ausdrücklich darauf hingewiesen, dass die Erfindung keineswegs die Funktion einer solchen Taste ausschließt. Es ist sogar vorteilhaft, dem Nutzer möglichst viele parallele Interaktionsmöglichkeiten anzubieten. Es kann also durchaus vorgesehen sein, dass der Nutzer zum Beenden eines Dialogs sowohl eine Wisch-Geste durchführen als auch eine Spracheingabe ("Dialog beenden") tätigen als auch ein herkömmliches Bedienelement ("Push-to-talk"-Taste) betätigen kann.

Die Erfindung wird ferner gebildet durch einen multimodalen Dialogautomaten für ein Fahrzeug, insbesondere für ein Kraftfahrzeug, der zur Ausführung der vorstehend beschriebenen Verfahrensschritte eingerichtet ist. Die Erfindung umfasst ferner ein Kraftfahrzeug mit einem solchen multimodalen Dialogautomaten.

Ein erfindungsgemäßer multimodaler Dialogautomat kann insbesondere durch ein Steuergerät des Fahrzeugs gebildet werden, das zur Erfassung und Verarbeitung von Sensorsignalen sowie zur Ansteuerung von Ausgabeeinrichtungen eingerichtet ist. Die Sensoren können Bestandteil des multimodalen Dialogautomats oder mit diesem verbindbar sein, wobei eine solche Verbindung beispielsweise mittels eines Datenbussystems des Fahrzeugs geschaffen werden kann. Die Sensoren können ein Mikrofon zur Erfassung von Spracheingaben und eine Kamera zur Erfassung von Gesten des Fahrzeugnutzers umfassen. Die Ausgabeeinrichtungen können einen Lautsprecher und / oder einen Bildschirm zur Ausgabe von Eingabeaufforderungen umfassen.

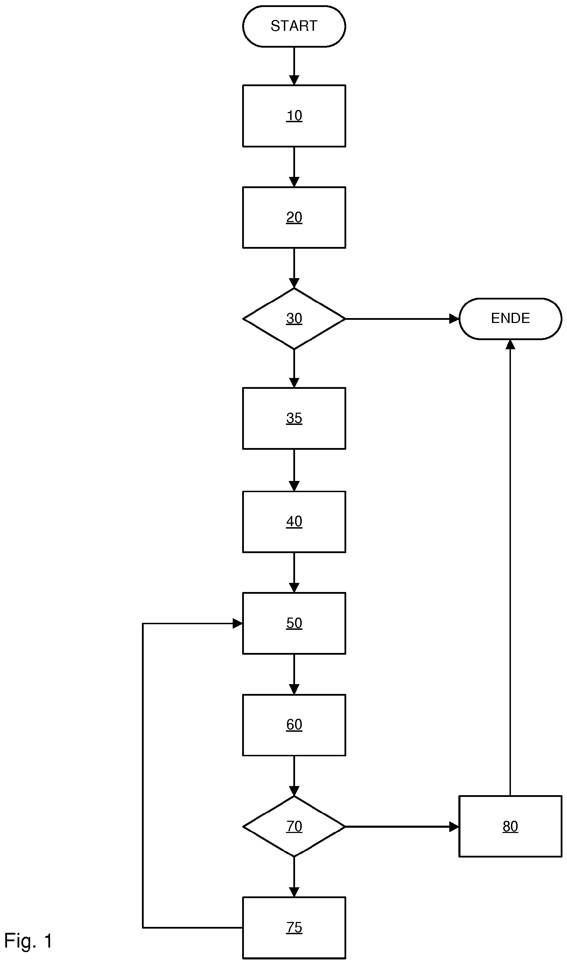

Weitere Ausführungsformen der Erfindung werden nachfolgend anhand einer beispielhaften Darstellung erläutert. Dazu zeigt
Fig. 1 ein Flussdiagramm einer Ausführungsform des erfindungsgemäßen Verfahrens.

Es wird darauf hingewiesen, dass es sich bei der Figur sowie der zugehörigen Beschreibung lediglich um ein Ausführungsbeispiel der Erfindung handelt. Insbesondere ist die Darstellung von Merkmalskombinationen in der Figur und / oder der Figurenbeschreibung nicht dahingehend auszulegen, dass die Erfindung zwingend die Verwirklichung aller genannten Merkmale erfordert. Andere Ausführungsformen der Erfindung können weniger, mehr und / oder andere Merkmale enthalten. Der Schutzbereich und die Offenbarung der Erfindung ergeben sich aus den beiliegenden Patentansprüchen und der vollständigen Beschreibung.

Zu Beginn des Verfahrens wird in Schritt 10 eine erste Spracheingabe eines Fahrzeugnutzers erfasst. Zu diesem Zeitpunkt ist die Gestenerkennung noch nicht aktiv. Die Spracheingabe könnte beispielsweise lauten "Bei Robert Meyer anrufen".

Im Anschluss wird in Schritt 20 die erste Spracheingabe verarbeitet, wozu beispielsweise ein im Fahrzeug oder in einem mit dem Fahrzeug verbundenen Mobiltelefon gespeichertes Telefonbuch durchsucht wird.

In Schritt 30 wird geprüft, ob der Dialog abgeschlossen ist. Wäre dies der Fall, so endete das Verfahren. Dies könnte z.B. der Fall sein, wenn die erste Spracheingabe so eindeutig wäre, dass sie sofort ausgeführt werden könnte. Im vorliegenden Beispiel soll jedoch angenommen werden, dass zu dem Telefonbucheintrag von "Robert Meyer" mehrere Telefonnummern gespeichert sind.

In Schritt 35 wird daher eine Eingabeaufforderung ausgegeben. Dazu wird auf einem Head-up-Display eine Liste aller Telefonnummern von Robert Meyer ausgegeben und die als Hauptnummer gespeicherte Telefonnummer grafisch hervorgehoben. Zugleich umfasst die Eingabeaufforderung eine Sprachausgabe des Inhalts "Möchten Sie Robert Meyers Hauptnummer anrufen?".

In Schritt 40 wird nunmehr die Gestenerkennung aktiviert. Ab diesem Zeitpunkt kann der Fahrzeugnutzer den Dialog auf multimodale Weise führen. Dies bedeutet auch, dass er Gesten nutzen kann, aber nicht zwingend nutzen muss. Er könnte den Dialog auch mit weitere Eingaben fortsetzen, die Spracheingaben sind oder sich herkömmlicher Bedienelemente bedienen.

In Schritt 50 wird eine weitere Eingabe des Fahrzeugnutzers erfasst, die eine Geste ist. Der Fahrzeugnutzer könnte nun mit einer Wischgeste den Dialog abbrechen oder mit einer "Blätter-Geste" (Zeigegeste in Auf- oder Abwärtsrichtung) durch die auf dem Head-up-Display angezeigte Liste der Telefonnummern blättern. Es soll jedoch angenommen werden, dass der Nutzer die vorgeschlagene Option (Robert Meyers Hauptnummer) wählen möchte. Die weitere Eingabe des Fahrzeugnutzers besteht somit in einer Zeigegeste ("Point-Geste"), bei der Fahrzeugnutzer seinen gestreckten Zeigefinger in Richtung des Head-up-Displays (mithin in Richtung der Frontscheibe des Fahrzeugs) hält und ihn leicht in diese Richtung (also in Zeigerichtung) vor- und anschließend wieder zurückbewegt.

Bei der in Schritt 60 durchgeführten Verarbeitung der weiteren Eingabe wird diese Geste interpretiert und ausgeführt. Der Telefonanruf wird durchgeführt.

In Schritt 70 wird geprüft, ob der Dialog abgeschlossen ist. Dies ist vorliegend der Fall, so dass die Gestenerkennung in Schritt 80 deaktiviert wird und das Verfahren endet. Wäre es hingegen notwendig, den Dialog weiter fortzusetzen (beispielsweise, weil die weitere Eingabe missverständlich oder zweideutig war), so könnte in Schritt 75 eine Eingabeaufforderung ausgegeben werden ("Ich habe Sie nicht verstanden. Bitte wiederholen Sie Ihre Eingabe."). Das Verfahren würde dann mit Schritt 50 fortgesetzt werden, bei dem eine weitere Eingabe erfasst wird.

## Patentansprüche

1. Verfahren zur Durchführung eines multimodalen Dialogs in einem Fahrzeug, insbesondere einem Kraftfahrzeug, wobei der multimodale Dialog einen Sprachdialog und eine Gestenerkennung umfasst, mit den Schritten
- Erfassen (10) einer Eingabe eines Fahrzeugnutzers zur Aktivierung des Sprachdialogs, wobei die Eingabe des Fahrzeugnutzers zur Aktivierung des Sprachdialogs eine erste Spracheingabe des Fahrzeugnutzers ist oder umfasst,
- Verarbeiten (20) der ersten Spracheingabe,
- Prüfen (30), ob der Dialog abgeschlossen ist und
- Aktivieren (40) der Gestenerkennung, falls der Dialog nicht abgeschlossen ist.

2. Verfahren nach Anspruch 1 mit den Schritten
- Erfassen (50) einer weiteren Eingabe, insbesondere einer Geste, des Fahrzeugnutzers,
- Verarbeiten (60) der weiteren Eingabe.

3. Verfahren nach Anspruch 2 mit den Schritten
- Prüfen (70), ob der Dialog abgeschlossen ist und
- Deaktivieren (80) der Gestenerkennung, falls der Dialog abgeschlossen ist.

4. Verfahren nach einem der Ansprüche 2 oder 3 mit den Schritten
- Ausgeben (35) einer Eingabeaufforderung, insbesondere einer gesprochenen Eingabeaufforderung, im Ansprechen auf die erste Eingabe des Fahrzeugnutzers und / oder
- Ausgeben (75) einer Eingabeaufforderung, insbesondere einer gesprochenen Eingabeaufforderung, im Ansprechen auf die weitere Eingabe des Fahrzeugnutzers.

5. Verfahren nach Anspruch 4 mit dem Schritt
- Erfassen (50) und / oder Verarbeiten (60) der weiteren Eingabe, insbesondere der Geste, des Fahrzeugnutzers, in Abhängigkeit der Eingabeaufforderung.

6. Verfahren nach Anspruch 5,
- wobei die weitere Eingabe eine Geste ist oder eine Geste umfasst,
- wobei die Eingabeaufforderung eine Aufforderung zur Auswahl einer vorgeschlagenen Option ist und
- wobei die Geste eine Zeigegeste, bevorzugt eine mit einem Finger ausgeführte Zeigegeste, besonders bevorzugt eine in Richtung eines Bildschirms ausgeführte Zeigegeste ist, wobei die vorgeschlagene Option auf dem Bildschirm dargestellt wird.

7. Verfahren nach einem der Ansprüche 5 oder 6,
- wobei die weitere Eingabe eine Geste ist oder eine Geste umfasst,
- wobei die Eingabeaufforderung eine Aufforderung zur Auswahl einer Option aus einer Mehrzahl vorgeschlagener Optionen ist, wobei die Eingabeaufforderung insbesondere eine geschlossene Frage oder eine Aufforderung zur Auswahl eines Eintrags einer Ergebnisliste ist und
- wobei die Geste eine eine im Wesentlichen vertikal ausgeführte Bewegung umfassende Zeigegeste, bevorzugt eine mit einem Finger ausgeführte Zeigegeste, besonders bevorzugt eine in Richtung eines Bildschirms ausgeführte Zeigegeste ist, wobei zumindest eine der vorgeschlagenen Optionen auf dem Bildschirm angezeigt wird.

8. Verfahren nach einem der Ansprüche 3 bis 7,
- wobei die weitere Eingabe eine Geste ist oder eine Geste umfasst und
- wobei die Geste eine eine im Wesentlichen horizontal mit einer Hand oder mit einem Finger ausgeführte Bewegung umfassende Geste ist,
mit dem Schritt
- Deaktivieren (80) der Gestenerkennung.

9. Multimodaler Dialogautomat für ein Kraftfahrzeug, wobei der Dialogautomat durch ein Fahrzeugsteuergerät gebildet wird, wobei das Fahrzeugsteuergerät eingerichtet ist, das Verfahren nach einem der Ansprüche 1-8 auszuführen, wobei das Fahrzeugsteuergerät Sensoren und zumindest eine Ausgabeeinrichtung umfasst oder mit diesen verbindbar ist, wobei die Sensoren ein Mikrofon zur Erfassung von Spracheingaben und eine Kamera zur Erfassung von Gesten eines Fahrzeugnutzers umfassen, wobei die zumindest eine Ausgabeeinrichtung einen Lautsprecher und/oder einen Bildschirm zur Ausgabe von Eingabeaufforderungen umfasst.

10. Kraftfahrzeug mit einem multimodalen Dialogautomat nach Anspruch 9.

## Claims

1. Method for carrying out a multimodal dialogue in a vehicle, in particular a motor vehicle, wherein the multimodal dialogue comprises a voice dialogue and gesture recognition, having the steps of
- capturing (10) an input of a vehicle user for activating the voice dialogue, wherein the input of the vehicle user for activating the voice dialogue is or comprises a first voice input of the vehicle user,
- processing (20) the first voice input,
- checking (30) whether the dialogue has been concluded, and
- activating (40) the gesture recognition if the dialogue has not been concluded.

2. Method according to Claim 1, having the steps of
- capturing (50) a further input, in particular a gesture, of the vehicle user,
- processing (60) the further input.

3. Method according to Claim 2, having the steps of
- checking (70) whether the dialogue has been concluded, and
- deactivating (80) the gesture recognition if the dialogue has been concluded.

4. Method according to either of Claims 2 and 3, having the steps of
- outputting (35) an input request, in particular a spoken input request, in response to the first input of the vehicle user, and/or
- outputting (75) an input request, in particular a spoken input request, in response to the further input of the vehicle user.

5. Method according to Claim 4, having the step of
- capturing (50) and/or processing (60) the further input, in particular the gesture, of the vehicle user on the basis of the input request.

6. Method according to Claim 5,
- wherein the further input is or comprises a gesture,
- wherein the input request is a request to select a suggested option, and
- wherein the gesture is a pointing gesture, preferably a pointing gesture carried out with a finger, particularly preferably a pointing gesture carried out in the direction of a screen, wherein the suggested option is displayed on the screen.

7. Method according to either of Claims 5 and 6,
- wherein the further input is or comprises a gesture,
- wherein the input request is a request to select an option from a plurality of suggested options, wherein the input request is, in particular, a closed question or a request to select an entry in a results list, and
- wherein the gesture is a pointing gesture comprising a movement carried out in a substantially vertical manner, preferably a pointing gesture carried out with a finger, particularly preferably a pointing gesture carried out in the direction of a screen, wherein at least one of the suggested options is displayed on the screen.

8. Method according to one of Claims 3 to 7,
- wherein the further input is or comprises a gesture, and
- wherein the gesture is a gesture comprising a movement carried out in a substantially horizontal manner with a hand or a finger,
having the step of
- deactivating (80) the gesture recognition.

9. Multimodal dialogue machine for a motor vehicle, wherein the dialogue machine is formed by a vehicle control unit, wherein the vehicle control unit is configured to carry out the method according to one of Claims 1-8, wherein the vehicle control unit comprises or can be connected to sensors and at least one output device, wherein the sensors comprise a microphone for capturing voice inputs and a camera for capturing gestures of a vehicle user, wherein the at least one output device comprises a loudspeaker and/or a screen for outputting input requests.

10. Motor vehicle having a multimodal dialogue machine according to Claim 9.

## Revendications

1. Procédé de mise en œuvre d'un dialogue multimodal dans un véhicule, notamment un véhicule automobile, dans lequel le dialogue multimodal comprend un dialogue verbal et une détection de gestes, avec les étapes suivantes :
- détection (10) d'une entrée d'un utilisateur de véhicule pour l'activation du dialogue verbal, dans lequel l'entrée de l'utilisateur de véhicule pour l'activation du dialogue verbal est ou comprend une première entrée vocale de l'utilisateur de véhicule ;
- traitement (20) de la première entrée vocale ;
- contrôle (30) de si le dialogue est terminé ; et
- activation (40) de la détection de gestes si le dialogue n'est pas terminé.

2. Procédé selon la revendication 1, avec les étapes suivantes :
- détection (50) d'une entrée supplémentaire, notamment d'un geste, de l'utilisateur de véhicule ;
- traitement (60) de l'entrée supplémentaire.

3. Procédé selon la revendication 2, avec les étapes suivantes :
- contrôle (70) de si le dialogue est terminé ; et
- désactivation (80) de la détection de gestes dans le cas dans lequel le dialogue est fini.

4. Procédé selon l'une quelconque des revendications 2 ou 3, avec les étapes suivantes :
- émission (35) d'une demande d'entrée, notamment d'une invite d'entrée orale, prononcée avec la première entrée de l'utilisateur de véhicule ; et/ou
- émission (75) d'une invite d'entrée, notamment d'une invite d'entrée orale, prononcée avec l'entrée supplémentaire de l'utilisateur de véhicule.

5. Procédé selon la revendication 4, avec l'étape suivante :
- détection (50) et / ou traitement (60) de l'entrée supplémentaire, notamment du geste, de l'utilisateur de véhicule, en fonction de l'invite d'entrée.

6. Procédé selon la revendication 5 :
- dans lequel l'entrée supplémentaire est un geste ou comprend un geste ;
- dans lequel l'invite d'entrée est une invite à sélectionner une option proposée ; et
- dans lequel le geste est un geste de pointage, de façon préférée un geste de pointage réalisé à l'aide d'un doigt, de façon particulièrement préférée un geste de pointage réalisé en direction d'un écran, dans lequel l'option proposée est représentée sur l'écran.

7. Procédé selon l'une quelconque des revendications 5 ou 6 :
- dans lequel l'entrée supplémentaire est un geste ou comprend un geste ;
- dans lequel l'invite d'entrée est une invite à sélectionner une option à partir d'une pluralité d'options proposées, dans lequel l'invite d'entrée est notamment une question fermée ou une invite à sélectionner un élément parmi une liste de résultats ; et
- dans lequel le geste est un geste de pointage comprenant un mouvement réalisé pour l'essentiel verticalement, de façon préférée un geste de pointage réalisé à l'aide d'un doigt, de façon particulièrement préférée un geste de pointage réalisé en direction d'un écran, dans lequel au moins une des options proposées est affichée sur l'écran.

8. Procédé selon l'une quelconque des revendications 3 à 7 :
- dans lequel l'entrée supplémentaire est un geste ou comprend un geste ; et
- dans lequel le geste est un geste comprenant un mouvement réalisé pour l'essentiel de façon horizontale à l'aide d'une main ou à l'aide d'un doigt ;
avec l'étape suivante :
- désactivation (80) de la détection de gestes.

9. Automate de dialogue multimodal pour un véhicule automobile, dans lequel l'automate de dialogue est formé par un appareil de commande dé véhicule, dans lequel l'appareil de commande dé véhicule est conçu pour mettre en œuvre le procédé selon l'une quelconque des revendications 1 à 8, dans lequel l'appareil de commande dé véhicule comprend des capteurs et au moins un dispositif d'émission ou peut être relié à ceux-ci, dans lequel les capteurs comprennent un microphone permettant de détecter des entrées vocales et une caméra permettant de détecter les gestes d'un utilisateur de véhicule, dans lequel l'au moins un dispositif d'émission comprend un haut-parleur et/ou un écran pour l'émission d'invites d'entrée.

10. Véhicule automobile avec un automate de dialogue multimodal selon la revendication 9.
